# EUROPÄISCHE PATENTSCHRIFT

(11) **EP 0 841 212 B1**
(45) Veröffentlichungstag und Bekanntmachung des Hinweises auf die Patenterteilung: **10.05.2000**
(21) Anmeldenummer: 97118510.3
(22) Anmeldetag: 24.10.1997
(51) Int. Cl.: B60N 2/44

(54) **Sitzbezug zum Schutz eines Kraftfahrzeug-Sitzes aus einem doppellagigen Teil aus Kunststoffolie**
Seat cover for protecting motor car seats made of a double-layer plastic film
Revêtement pour la protection de sièges de véhicules composé d'une feuille de plastique en double

(30) Priorität: 07.11.1996 DE 19645999
(43) Veröffentlichungstag der Anmeldung: 13.05.1998
(73) Patentinhaber: Horn, Joachim, 34613 Schwalmstadt (DE)
(72) Erfinder: Horn, Joachim, 34613 Schwalmstadt (DE)
(74) Vertreter: Patentanwälte Rehberg + Hüppe

(56) Entgegenhaltungen:
- EP-A- 0 457 992
- EP-A- 0 458 757
- DE-A- 4 210 232
- DE-B- 1 630 878
- DE-C- 4 132 714
- GB-A- 1 139 794

## Beschreibung

Die Erfindung bezieht sich auf einen Sitzbezug zum Schutz eines Kraftfahrzeug-Sitzes mit den im Oberbegriff des Anspruches 1 angegebenen Merkmalen. Der Sitzbezug weist auch eine das Sitzpolster zumindest teilweise umschließende Sitztasche auf. Der Sitzbezug kann - einmal oder auch mehrmals - auch in Kraftfahrzeugwerkstätten bei Reparaturarbeiten, Inspektionen o. dgl. eingesetzt werden. Er kann auch insbesondere für die Erstausrüstung zum Schutz des Sitzes nach dessen Herstellung, während der Montage und dem Versand bis zum Händler genutzt werden.

Sitzbezüge aus Kunststoffolie werden über Kraftfahrzeug-Sitze gestülpt bzw. gezogen, um eine Verschmutzung des Kraftfahrzeug-Sitzes durch Monteure und andere Personen zu verhindern. Bekannt sind solche Sitzbezüge in ihrer Anwendung in Automobilwerkstätten, wenn an Kraftfahrzeugen eine Inspektion oder Reparatur durchgeführt wird. Aber auch bei der Erstausstattung eines Kraftfahrzeugs, also im Automobilwerk bei der Montage des Kraftfahrzeugs, sind die Kraftfahrzeug-Sitze bereits einer Verschmutzungsgefahr ausgesetzt. Diese Verschmutzungsgefahr beginnt sogar bereits beim Hersteller der Kraftfahrzeug-Sitze und bei der Zulieferung der Sitze zum Automobilwerk. Sie setzt sich fort bei der Bestückung von Förderanlagen mit den Sitzen, über die der Transport der Kraftfahrzeug-Sitze zum Montageband des Automobilwerks führt. Weiterhin müssen die KraftfahrzeugSitze in die Automobilkarosserie eingebaut werden. Auch während der Montage weiterer Teile am Kraftfahrzeug kommt eine Vielzahl von Monteuren nacheinander mit den Kraftfahrzeug-Sitzen in Berührung. Schließlich muß das fertig montierte Kraftfahrzeug vom Band gefahren, auf Lastkraftwagen oder Eisenbahnwaggons aufgefahren und letztlich beim Kraftfahrzeughändler noch mehrmals gehandhabt werden, bis das Kraftfahrzeug letztlich in die Hand des Erwerbers bzw. Käufers ausgeliefert werden kann. Da das Gewicht der Kraftfahrzeug-Sitze ansteigt, und zwar insbesondere durch den Einbau von Verstellmotoren und anderen Elementen, wird es immer mühevoller, die Kraftfahrzeug-Sitze durch den Monteur von Hand in die Fahrzeugkarosserie einzubauen. Es bietet sich hier die Robotermontage am Montageband an. Ein dabei eingesetzter Roboter besitzt eine Rüsselplatte, mit der er bei in normaler Stellung abgesetztem Sitz in den Spalt zwischen Rückenlehne und Sitzpolster eingreift und den Sitz - meist paarweise - in die Karosserie einschwenkt und dort positioniert. Anschließend wird die Rüsselplatte aus dem Spalt zwischen Rückenlehne und Sitzpolster herausgezogen. Bei Verwendung üblicher Sitzbezüge würde die Rüsselplatte beim Eindringen in den Spalt die Vorderlage des Sitzbezugs aufschlitzen, so daß die Schutzfunktion des Sitzbezugs wesentlich beeinträchtigt ist. Man hat deshalb versuchsweise die das Sitzpolster umgreifende Tasche von dem Sitzpolster gelöst und greift mit der Rüsselplatte des Roboters nunmehr unterhalb der Folie des Sitzbezugs in den Spalt zwischen Rückenlehne und Sitzpolster ein. Dabei besteht allerdings die Gefahr, daß der Kraftfahrzeug-Sitz durch die Rüsselplatte selbst verschmutzt wird. Selbst, wenn dies nicht der Fall ist, stellt es einen zusätzlichen Arbeitsaufwand dar, den Sitzbezug im Bereich des Sitzpolsters von diesem zu lösen und nach der Montage des Kraftfahrzeug-Sitzes in der Karosserie den Sitzbezug mit seiner Tasche auf das Sitzpolster wieder aufzuziehen. Nachteilig ist weiterhin, daß das Sitzpolster während der Montage des Sitzes in die Karosserie ungeschützt ist.

Von der Herstellung des Sitzes beim Zulieferer bis zur Auslieferung des Kraftfahrzeugs an den Erwerber oder Kunden kommen die Kraftfahrzeug-Sitze etwa 30 bis 35 mal in Kontakt mit Monteuren und anderen Personen, so daß hier eine erhebliche Verschmutzungsgefahr besteht. Um dieser Verschmutzungsgefahr entgegenzuwirken, sind die bereits beschriebenen Sitzbezüge aus Kunststoffolie bekannt, die oft bereits beim Sitzhersteller, spätestens aber beim Kraftfahrzeughersteller, über die Kraftfahrzeug-Sitze, insbesondere den Fahrersitz, gestülpt werden und erst vor Auslieferung des Fahrzeugs an den Kunden entfernt werden. Solche Sitzbezüge für Erstausrüstung unterscheiden sich üblicherweise nicht sonderlich von den Sitzbezügen, die während der Inspektion oder Reparatur eines Kraftfahrzeugs benutzt werden. Sie können aus vergleichsweise dickerer Kunststoffolie hergestellt werden, die der insoweit größeren Beanspruchung gerecht wird.

Ein Sitzbezug der eingangs beschriebenen Art ist aus der DE 42 10 232 C2 bekannt. Der Sitzbezug weist an seinen beiden Endbereichen je eine Tasche auf, wobei die Sitztasche zur Aufnahme eines Teils des Sitzpolsters und die Rückenlehnentasche zur Aufnahme eines Teils der Rückenlehne des Sitzes bestimmt ist. Der Sitzbezug weist eine Vorderlage auf, die länger gestaltet ist, als es der Summe der wirksamen Längen der Rückenlehne und des Sitzpolsters entspricht. Aufgrund dieser insoweit länger ausgebildeten Vorderlage ist es möglich, die Vorderlage in diesem Bereich in eine Fixier- und Eingriffsfalte zu legen und im Bereich des Spaltes zwischen Rückenlehne und Sitzpolster einzuklemmen. Die Fixier- und Eingriffsfalte ist nach beiden Sitz-Seiten hin geschlossen. Die Falte dient zunächst einmal der Fixierung des Sitzbezugs im Bereich des Spalts. Durch die üblicherweise vorhandene Spannung zwischen der Rückenlehne und dem Sitzpolster wird die Falte des Sitzbezugs hier eingeklemmt, was sich nicht nur insofern vorteilhaft auswirkt, daß der die Rückenlehne umschließende Teil der Vorderlage und der das Sitzpolster umschließende Teil der Vorderlage jeweils straffer am Kraftfahrzeug-Sitz anliegen und gehalten werden, sondern es tritt auch der weitere Vorteil auf, daß die Verrutschungsgefahr gerade im Bereich des Spalts erheblich reduziert ist, so daß sich so gut wie keine ungeschützten Flächenbereiche ergeben können. Weiterhin läßt sich ein Kraftfahrzeug-Sitz, ausgestattet mit diesem Schonbezug, auch für die Robotermontage mit einer Rüsselplatte anwenden, und zwar ohne daß die Vorderlage durchtrennt wird. Die Tasche wird zweckmäßig bereits beim Sitzhersteller in den Spalt zwischen Rückenlehne und Sitzpolster eingeführt. Der Sitzbezug wird damit zusätzlich am Kraftfahrzeug-Sitz fixiert und das Einschieben der Rüsselplatte des Roboters am Montageband führt zu keiner Veränderung des Sitzes des Sitzbezugs auf dem Kraftfahrzeug-Sitz.

Ein weiterer Sitzbezug ist aus der DE-B 16 30 878 bekannt. Bei der Herstellung wird ein Schlauch aus Kunststoffolie durch einen Längsschnitt aufgeschnitten. Die dabei entstehenden beiden Ränder werden voneinander entfernt und flachgefaltet auf das übrige Material des Schlauchs gelegt, wobei eine flachliegende, im wesentlichen doppellagige Bahn, gebildet wird, bei der die Kunststoffolie im Bereich der beiden freien Ränder links und rechts umgeschlagen ist. Durch eine Querschweißung, also quer zur Förderrichtung der Folienbahn bei der Herstellung der Sitzbezüge, werden pro Sitzbezug die umgeschlagenen Bereiche, die insgesamt gleichsam eine Rücklage bilden, mit der durchgehenden Vorderlage für jeden Sitzbezug miteinander verbunden. Dabei werden zwei Taschen gebildet, die in der Regel unterschiedlich tief bemessen sind, wobei die eine Rückenlehnentasche zur Aufnahme der Rückenlehne des Kraftfahrzeug-Sitzes und die Sitztasche zur Aufnahme bzw. zum Umschließen des Sitzpolsters des Kraftfahrzeug-Sitzes bestimmt sind. Die durchgehende Seite des Schlauchs bzw. Sitzbezugs ist als Vorderlage bezeichnet, weil sie in der über den Sitz gestülpten Stellung des Sitzbezugs vorn liegt und damit auf der Sitzfläche des Sitzpolsters und auf der Rückenlehnenfläche der Rückenlehne anliegt. Die andere Lage des Sitzbezugs ist als Rücklage bezeichnet, weil sie in montiertem Zustand des Sitzbezugs hinter der Rückenlehne bzw. unter dem Sitzpolster zu liegen kommt und damit nach rückwärts ausgerichtet ist. Solche bekannten Sitzbezüge umschließen den Kraftfahrzeug-Sitz mehr oder weniger lose. Hierdurch besteht die Gefahr, daß ein solcher bekannter Sitzbezug während seiner Benutzung verrutscht, so daß sich im Übergangsbereich zwischen Sitzpolster und Rückenlehne mehr oder weniger große ungeschützte Flächen ergeben können, die dann nicht vor Verschmutzung geschützt sind. Somit werden die Sitztasche und die Rückenlehntasche gebildet, die das Sitzpolster einerseits und die Rückenlehne andererseits teilweise aufnehmen und schützen. Bereiche des Sitzes bleiben jedoch ungeschützt. Dies betrifft insbesondere einen unteren und einen hinteren Bereich des Sitzpolsters, den Gelenkbereich des Sitzes sowie den unteren Bereich der Rückseite der Rückenlehne. Diese Bereiche können einer Verschmutzung unterliegen, die sich besonders auffällig und nachteilig bei Sitzen aus hell eingefärbtem Leder auswirkt.

Der Erfindung liegt die Aufgabe zugrunde, einen insbesondere für Erstausrüstung geeigneten Sitzbezug aus Kunststoffolie zu schaffen, der maschinell herstellbar ist, bereits beim Sitzhersteller aufgebracht werden kann und den Sitz bis zur Auslieferung des Fahrzeugs an den Käufer wirksamer und vollständiger als bisher schützt.

Erfindungsgemäß wird dies dadurch erreicht, daß die die Sitztasche mitbildende Rücklage einen durch eine Ausstanzung gebildeten U-förmigen, die Seiten des Sitzpolsters umschließenden Schutzstreifen aufweist, und daß die Vorderlage in dem für den Spalt zwischen Rückenlehne und Sitzpolster bestimmten Bereich zu beiden Seiten je ein Schutzelement zum Abdecken der Gelenkbereiche des Sitzes aufweist.

Die Erfindung geht von dem Gedanken aus, die Sitztasche und andere Teile des Sitzbezuges mit einer verbesserten Schutzwirkung zu versehen. Zu diesem Zweck besitzt die die Sitztasche mitbildende Rücklage einen Schutzstreifen, der sich U-förmig im seitlichen und unteren Bereich des Sitzpolsters um dieses herum erstreckt und dieses abdeckt. Dieser Schutzstreifen erbringt nicht nur eine Schutzwirkung, sondern verbessert gleichzeitig den Sitz der Sitztasche in aufgezogenem Zustand des Sitzbezuges am Kraftfahrzeug-Sitz. Weiterhin sind beidseitig Schutzelemente gebildet, die zum Abdecken der Gelenkbereiche des Sitzes dienen. Der Gelenkbereich ist der Bereich, in dem das Gelenk für die kippbare bzw. verschwenkbare Rückenlehne vorgesehen ist und sich seitlich zu beiden Seiten des Sitzes erstreckt. Dieser Bereich ist insbesondere vor dem Einbau des Kraftfahrzeug-Sitzes in das Kraftfahrzeug gefährdet. Diese in symmetrischer Ausbildung vorgesehenen Schutzbereiche werden im wesentlichen aus dem Material der Vorderlage gebildet, welches sich bei der Montage am Kraftfahrzeug-Sitz so auffaltet, daß die Gelenkbereiche abgedeckt werden. Auch diese Schutzelemente tragen zu einem verbesserten Sitz des Sitzbezuges am Kraftfahrzeug-Sitz bei. Da die Gelenkbereiche gleichsam umschlossen werden, verstärken die Schutzelemente die Wirkung der Sitztasche, der Rücklehnentasche und der Fixier- und Eingriffsfalte gegen ein unbeabsichtigtes Herabfallen des Sitzbezuges z. B. während einer hängenden Überkopf-Förderung.

Die Erfindung wendet sich insofern vom Stand der Technik ab, als ein Auseinanderspreizen der freien Ränder des längsgeschnittenen Schlauches entfällt und im Gegenteil die Ränder nicht auseinandergeführt werden, sondern eine Längsfaltung der Bahn derart erfolgt, daß das Material im wesentlichen vierlagig übereinander geführt wird.

Besonders sinnvoll ist es, wenn die Vorderlage in dem für den Spalt zwischen Rückenlehne und Sitzpolster bestimmten Bereich eine Fixier- und Eingriffsfalte aufweist, die durch die Vorderlage verbindende Trennschweißungen begrenzt wird, wobei die Trennschweißungen mit Abstand zu den Querschweißungen enden und so gleichzeitig die Schutzelemente begrenzen. Das Material der durchgehenden Vorderlage wird hier gleichsam zur Bildung einer Fixier- und Eingriffsfalte einerseits und zur Bildung der Schutzelemente aufgeteilt. Die Fixier- und Eingriffsfalte ist nur im Mittelbereich vorgesehen, während die Schutzelemente an die Querschweißungen anschließen. Die vorgesehenen Trennschweißungen dienen dazu, das Material der Vorderlage in diesem Bereich in die Fixier- und Eingriffsfalte einerseits und in die beiden Schutzelemente andererseits zu unterteilen. Unter einer solchen Trennschweißung wird eine Schweißung verstanden, bei der die betreffenden Bereiche der Vorderlage miteinander verbunden werden und gleichzeitig eine Ausnehmung entsteht, indem dort ein entsprechend dem Verlauf der Trennschweißungen begrenztes Abfallstück entfernt wird. Dies ist erforderlich, damit die Fixier- und Eingriffsfalte einerseits in den Spalt zwischen Rückenlehne und Sitzpolster eingeführt werden kann, während andererseits die benachbarten Bereiche der Vorderlage die Schutzelemente bilden können, die die Gelenkbereiche des Sitzes außen umgeben.

Ist der Spalt zwischen Rückenlehne und Sitzpolster eng genug, um die Fixier- und Eingriffsfalte festzuklemmen, entsteht eine kraftschlüssige Fixierung. Wenn der Spalt zu groß ist, um eine Klemmwirkung herbeizuführen, oder wenn eine zusätzliche formschlüssige Fixierung in diesem wichtigen Bereich des Sitzbezuges gewünscht wird, kann die Fixier- und Eingriffsfalte über ein Verbindungsmittel mit der Rücklage verbunden werden. Als Verbindungsmittel kann eine Verklebung, eine Verschweißung o. dgl. eingesetzt werden. Der Sitzbezug kann von dem Sitz nur nach dem Lösen der formschlüssigen Fixierung abgenommen werden. Auf diese Weise kann eine Versiegelung des Sitzes, ein Originalitätsschutz mit eventueller Verknüpfung von Garantieleistungen des Sitzeherstellers realisiert werden.

Damit sich die Schutzelemente bei dem Aufziehen des Sitzbezuges auf den Kraftfahrzeug-Sitz beim Sitzhersteller entsprechend auffalten können, sind die Vorderlage und die Rücklage in dem für den Spalt zwischen Rückenlehne und Sitzpolster bestimmten Bereich mit Ausnahme der Trenn- und Querschweißungen unverbunden. Dadurch wird erreicht, daß sich die Schutzelemente beim Überziehen des Sitzbezuges über den Kraftfahrzeug-Sitz entsprechend auffalten und die Schutzstellung einnehmen können.

Es ist sinnvoll, wenn die die Rückenlehnentasche mitbildende Rücklage zur Abdeckung des rückwärtigen Teils des Sitzpolsters verlängert ist. Beide Taschen, also die Sitztasche einerseits und die Rückenlehnentasche andererseits, sind gegenüber den im Stand der Technik bekannten Taschen verlängert. Durch diese Verlängerung wird erreicht, daß in übergezogenem Zustand der Kraftfahrzeug-Sitz nicht nur von vorn, also insbesondere im Bereich der Vorderseite des Sitzpolsters und der Rückenlehne, geschützt wird, sondern auch dann, wenn das Kraftfahrzeug beispielsweise von Kunden auch im hinteren Bereich erprobt wird und sich eine Person auf die Rücksitze des Kraftfahrzeuges setzt. Dabei besteht die Gefahr, daß insbesondere bei Sitzen aus hell eingefärbtem Leder der rückwärtige Teil der Rückenlehne und/oder der hintere Teil des Sitzpolsters beispielsweise durch Schuhspuren verschmutzt wird. Hier wirkt die verlängerte Rückenlehnentasche, die das Entstehen von schwarzen Streifen o. dgl. verhindert.

Wenn die die Rückenlehnentasche mitbildende Rücklage zwei Ausstanzungen aufweist, die die Trennschweißungen mit Abstand umgeben, ergibt sich einerseits ein gutes Umschließen der Gelenkbereiche durch die Schutzelemente und andererseits die Möglichkeit, daß der untere Teil der Rücklage freihängend seinen Schutzzweck erfüllt. Insbesondere kann die die Rückenlehnentasche mitbildende Rücklage bis zum freien Ende der Fixier- und Eingriffsfalte verlängert sein. Durch die Ausstanzungen ergibt sich eine gewisse Freiheit zwischen dem Ende der die Rückenlehnentasche mitbildenden Rücklage einerseits und der Fixier- und Eingriffsfalte andererseits, so daß das eine Element durch den Spalt zwischen Sitzpolster und Rückenlehne geführt und eingeklemmt werden kann, während das andere Element gleichsam auf der Rückseite des Sitzes seine Schutzfunktion erfüllt.

Wenn die an der Rücklage der Sitztasche vorgesehene und den Schutzstreifen begrenzende Ausstanzung die Trennschweißungen mit Abstand umschließt, ergibt sich eine vereinfachte Herstellung für die Trennschweißungen, durch die lediglich die Vorderlage erreicht wird. Es sind keine zusätzlichen Vorkehrungen erforderlich, um in einer etwa vierlagig gefalteten Bahn die Trennschweißungen anzubringen, die lediglich die Vorderlage erfassen.

Die an der Rücklage der Sitztasche vorgesehene und den Schutzstreifen begrenzende Ausstanzung kann in dem freien Rand der Rücklage enden. Damit wird gleichzeitig eine Trennung zwischen der Fixier- und Eingriffsfalte einerseits und den Schutzelementen andererseits erreicht.

Die Vorderlage sollte beidseitig Perforationsstrecken zum Durchstecken der Gurtpeitsche aufweisen. Durch die beidseitige Anordnung von Perforationsstrecken wird nur die Perforationsstrecke geöffnet, die zum Durchstecken der Gurtpeitsche benötigt wird. Die andere Perforationsstrecke bleibt weitgehend geschlossen. Es erübrigt sich, die Ausbildung und Anwendung unterschiedlicher Sitzbezüge für die links bzw. rechts am Fahrzeug eingebauten Vordersitze.

Die Sitztasche und/oder die Rückenlehnentasche kann abgeschrägte Ecken aufweisen. Durch diese abgeschrägten Ecken wird eine bessere Anpassung des Umrisses des Sitzbezuges an die meist gewölbt ausgebildeten Formen der Kraftfahrzeug-Sitze erreicht. Es besteht die Möglichkeit, in die Rückenlehnentasche eine integrierte Kopfstütze mit einzubeziehen. Grundsätzlich wird durch eine solche Abschrägung auch der Sitz des Sitzbezuges im Bereich der Sitztasche und/oder der Rückenlehnentasche verbessert. Überhängende Materialstücke, die für die Positionierung des Sitzes im Kraftfahrzeug hinderlich sein könnten, werden damit vermieden.

Die Erfindung wird anhand bevorzugter Ausführungsbeispiele weiter erläutert und beschrieben. Es zeigen:
- Fig. 1: eine Draufsicht auf eine Bahn aus aneinanderhängenden Sitzbezügen vor dem Aufwickeln auf eine Rolle,
- Fig. 2: eine Draufsicht auf die oberste Lage des Sitzbezuges gemäß Fig. 1,
- Fig. 3: eine Draufsicht auf die zweitoberste Lage des Sitzbezuges gemäß Fig. 1,
- Fig. 4: eine Draufsicht auf die drittoberste Lage des Sitzbezuges gemäß Fig. 1,
- Fig. 5: eine Draufsicht auf die unterste Lage des Sitzbezuges gemäß Fig. 1,
- Fig. 6: eine Draufsicht auf die oberste Lage eines Sitzbezuges in einer zweiten Ausführungsform,
- Fig. 7: die dazugehörige nächste Lage,
- Fig. 8: eine zu dem Ausführungsbeispiel der Fig. 6 bis 9 gehörende dritte Lage,
- Fig. 9: eine Draufsicht auf die unterste Lage und
- Fig. 10: eine Seitenansicht des Sitzbezuges gemäß Fig. 1 an einem Kraftfahrzeug-Sitz.

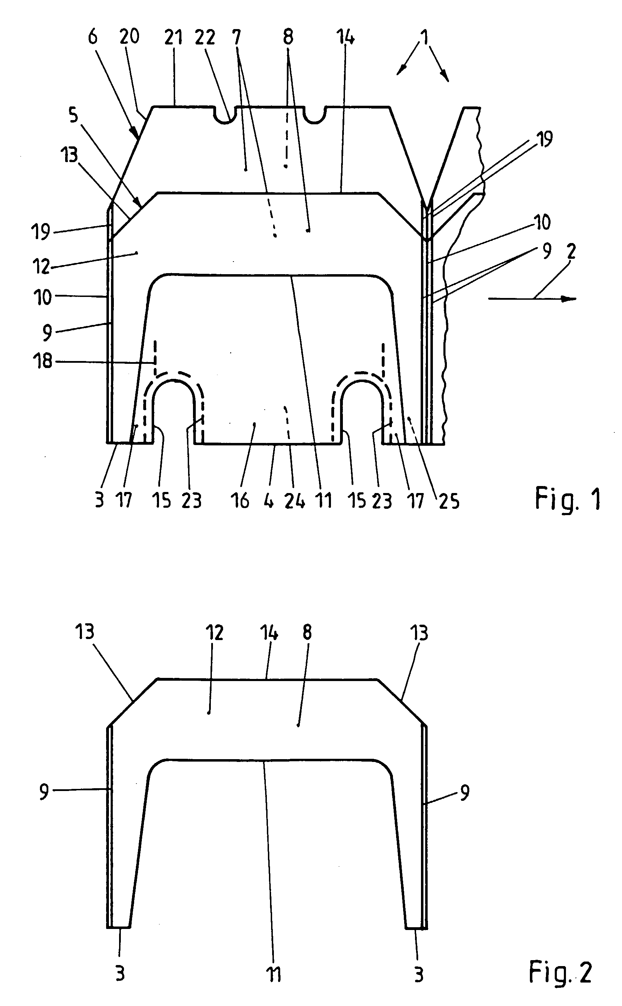

Der in Fig. 1 dargestellte Sitzbezug 1 wird bahnenförmig hergestellt, und zwar ausgehend von einem Kunststoffolienschlauch, der in Längsrichtung aufgeschnitten und umgefaltet wird. Die Förderrichtung der so geförderten und bearbeiteten Bahn ist durch einen Pfeil 2 gekennzeichnet. Es versteht sich, daß nach der Bearbeitung die einzelnen Sitzbezüge 1 aneinanderhängen und zu einer Rolle aufgewickelt werden können, obwohl in Fig. 1 nur ein vollständiger Sitzbezug und ein Teil eines weiteren benachbarten Sitzbezuges dargestellt ist. Die gemäß Pfeil 2 geförderte Bahn ist in weiten Bereichen vierlagig, wobei die einzelnen Bahnen gemäß den Fig. 2 bis 5 in ihrer Reihenfolge nacheinander einzeln dargestellt sind.

Durch den Längsschnitt an einem Schlauch in Richtung des Pfeiles 2 entstehen zwei freie Ränder 3 und 4. Der Schlauch wird über weite Bereiche vierlagig so zusammengefaltet und zusammengeführt, daß sich die beiden freien Ränder 3 und 4 an der obersten und untersten Lage decken und dazwischen zwei Falten verlaufen, deren Höhe jeweils nach der Höhe einer Sitztasche 5 und einer Rückenlehnentasche 6 richten. Jede Tasche wird von zwei Bahnen gebildet, wobei die beiden mittleren Bahnen eine durchgehende Vorderlage 7 bilden, während die oberste und unterste Bahn mit ihren freien Rändern 3 und 4 gleichsam Bestandteile einer Rücklage 8 sind. Es ist aber auch möglich, statt Bildung einer durchgehenden Vorderlage 7 und zwei die Rücklage 8 bildenden Bahnbereichen die Sitzbezüge 1 aus vier begrenzten Bahnen zusammenzuführen, wie sie anhand der Fig. 2 bis 5 im Einzelnen vorstellbar sind. Vorteilhafter ist es jedoch, von einem der Länge nach aufgeschnittenen Schlauch auszugehen und durch zusätzliche Längsfaltung ohne Spreizung eine Vorderlage 7 und eine Rücklage 8 zu nutzen. Zur Bildung der Sitztasche 5 wird der entsprechende Teil der Vorderlage 7 mit dem entsprechenden Teil der Rücklage 8 durch Querschweißungen 9 verbunden, wie dies anhand der Fig. 1 bis 3 erkennbar ist. Diese Querschweißungen 9 erstrecken sich der zur Förderrichtung gemäß Pfeil 2 und verbinden nur die beiden obersten Bahnen zur Bildung der Sitztasche 5. Benachbarte Querschweißungen 9 aneinanderhängender Sitzbezüge 1 sind durch eine durchtrennbare Perforation 10 gehalten, um die Bahn auf eine Rolle aufzuwickeln. Diese Perforation 10 wird jeweils durchtrennt, um einen Sitzbezug 1 von der Rolle abzunehmen und über einen Kraftfahrzeug-Sitz überzuziehen. Für den Fall, daß die Sitzbezüge 1 stapelweise angewendet werden sollen, sind die Perforationen 10 durch entsprechende Schnitte ersetzt.

Wie aus Fig. 2 ersichtlich ist, wird die Unterseite der Sitztasche 5 unter Mitwirkung der Bahn der Rücklage 8 gebildet, die eine U-förmig geführte Ausstanzung 11 aufweist, die in ihrem mittleren Bereich parallel und mit Abstand zum Rand 3 geführt ist und beidendig in den Rand 3 ausläuft, so daß aus der Rücklage 8 ein Schutzstreifen 12 als Bestandteil der Sitztasche 5 gebildet wird. Auf der dem freien Rand 3 gegenüberliegenden Seite können abgeschrägte Ecken 13 durch Trennschweißungen gebildet sein.

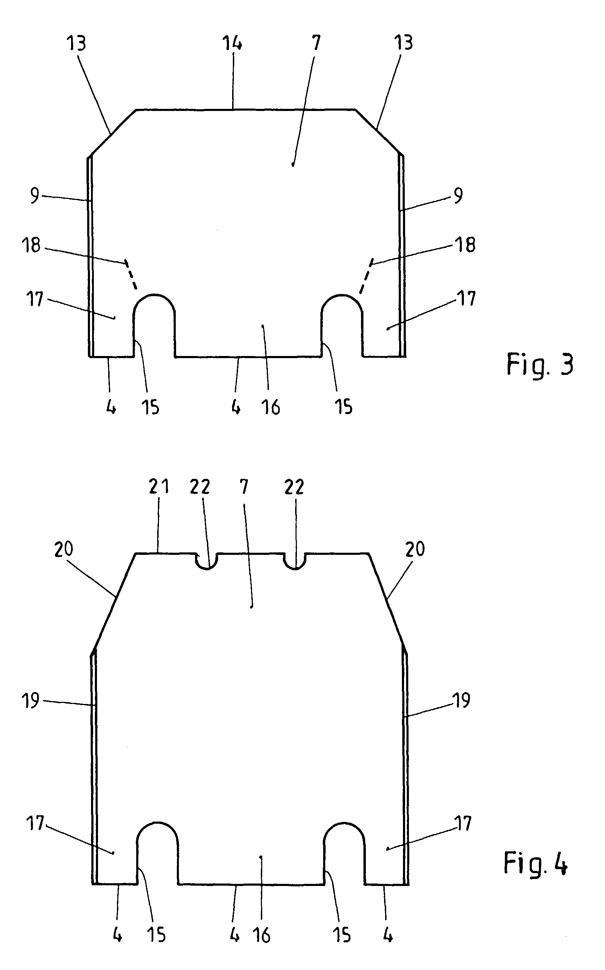

Die gesamte Sitztasche 5 wird aus dem in Fig. 2 dargestellten Teil der Rücklage 8 und dem in Fig. 3 dargestellten Teil der Vorderlage 7 gebildet, wobei die Querschweißungen 9, über die die beiden Teile verbunden werden, angedeutet sind. Die abgeschrägten Ecken 13 ergeben sich somit auch an dem Teil der Vorderlage 7. Die freien Ränder 3 und 4 sind unverbunden. Auf der gegenüberliegenden Seite besteht eine Verbindung im Bereich des Randes 14, der entweder durch eine Umfaltlinie des Ausgangsschlauches oder durch eine Trennschweißung erzeugt bzw. verbunden ist. Der in Fig. 3 dargestellte Teil der Vorderlage 7 weist im Bereich des Randes 4 zwei Trennschweißungen 15 auf, deren linienförmige Gestaltung von dem freien Rand 4 ausgeht und in diesen zurückgeführt ist. Die Trennschweißungen 15 sind mit Abstand zu den Querschweißungen 9 bzw. Perforationen 10 angeordnet. Die Trennschweißungen 15 verbinden entlang der gezeigten Linienführung die in den Fig. 3 und 4 insgesamt dargestellten Bereiche der Vorderlage 7 miteinander. Die Tiefe der Trennschweißungen 15 entspricht etwa dem Maß, um welches die Vorderlage 7 insgesamt länger ist als die wirksame zu bedeckende Länge der Rückenlehnenfläche und der Sitzfläche. Auf diese Art und Weise wird durch diesen an sich überschüssigen Bereich der Vorderlage 7 zwischen den beiden Trennschweißungen 15 eine Fixier- und Eingriffsfalte 16 gebildet, die der Verankerung des Sitzbezuges 1 in der am Sitz übergestülpten Stellung in dem Spalt zwischen Sitzpolster und Rückenlehne dient. Gleichzeitig werden durch die Trennschweißungen 15 aus dem überschüssigen Material in Richtung auf die Querschweißungen 9 Schutzelemente 17 gebildet, also doppellagige Folienbereiche, die entlang der Trennschweißungen 15 und des freien Randes 4 miteinander in Verbindung stehen, nicht aber nach außen. Diese Schutzelemente dienen der Abdeckung von Gelenkbereichen des Sitzes, also Bereichen zwischen Rückenlehne und Sitzpolster außen.

Der in Fig. 3 dargestellte Teil der Sitztasche 5 weist seitlich und benachbart zu den Trennschweißungen 15 je eine Perforationsstrecke 18 auf, von denen je nach Anordnung des Kraftfahrzeug-Sitzes die eine oder andere durchtrennt und die Gurtpeitsche hindurchgeführt werden kann, während die jeweils andere Perforationsstrecke 18 geschlossen bleibt.

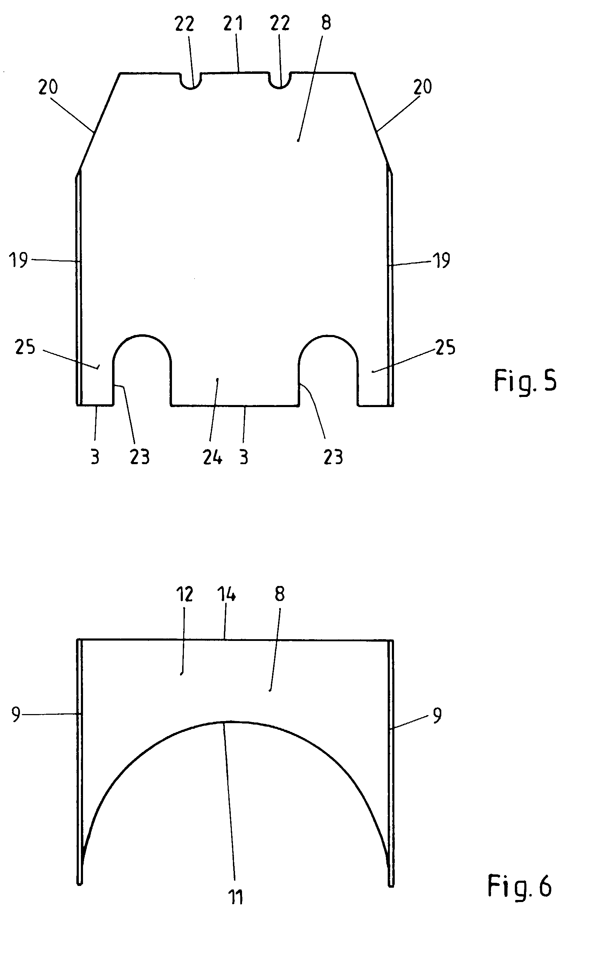

Die Rückenlehnentasche 6 wird aus den beiden Folien gebildet, die in Fig. 4 und 5 dargestellt sind, nämlich aus einem Teil der Vorderlage 7 und einem Teil der Rücklage 8. Diese beiden Folienbereiche sind quer zur Laufrichtung gemäß Pfeil 2 durch Querschweißungen 19 miteinander verbunden. Auch die Rückenlehnentasche 6 kann abgeschrägte Ecken 20 aufweisen, die durch Trennschweißungen gebildet sind. Auch im Bereich dieser abgeschrägten Ecken 20 sowie im Bereich des gemeinsamen Randes 21 sind die Bereiche der Vorderlage 7 und der Rücklage 8 miteinander verbunden, so daß auch die Rückenlehnentasche 6 U-förmig geschlossen ist, während sie nur von der Seite der freien, unverbundenen Ränder 3 und 4 her offen, d. h. überziehbar über den Sitz, ausgebildet ist. Der Rand 21 kann durch eine Faltlinien des geschlitzten Schlauches in Längsrichtung oder aber durch eine Trenn- oder Verbindungsschweißung gebildet sein. Im Bereich des Randes 21 können Ausnehmungen 22 für die Durchführung der Verankerungsstangen von Kopfstützen des Sitzes vorgesehen sein. Es ist andererseits aber auch möglich, den Rand 21 und die abgeschrägten Ecken 20 so zu führen, daß in der Rückenlehnentasche 6 auch integrierte Kopfstützen aufgenommen werden können. Die Rückenlehnentasche 6 besitzt in der Regel ohnehin eine größere Tiefe als die Sitztasche 5, wie insbesondere aus Fig. 1 ersichtlich ist.

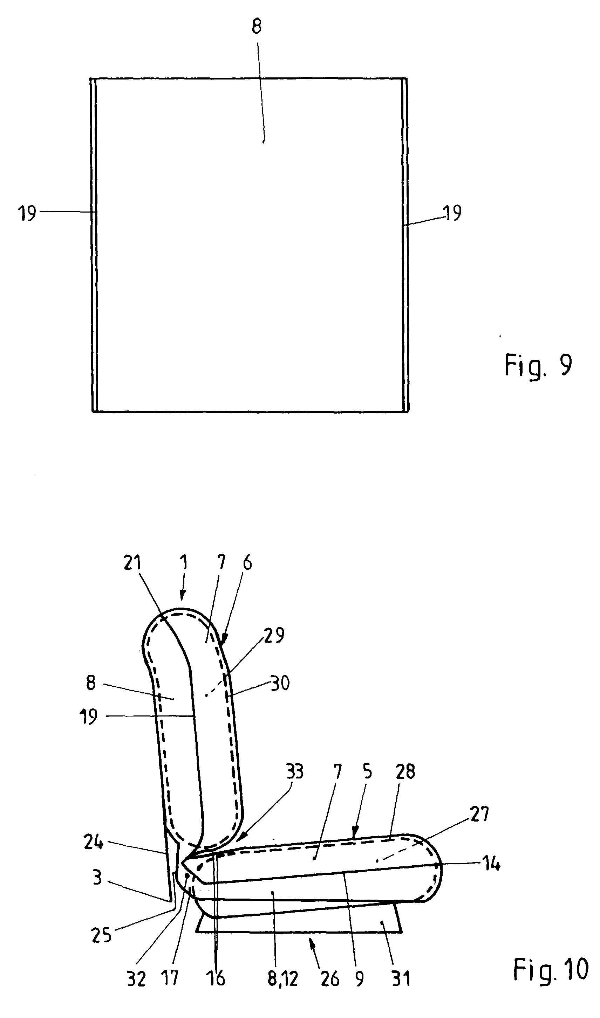

Fig. 5 läßt erkennen, daß der Bereich der Rücklage 8, der die Rückenlehnentasche 6 mitbildet, von seinem freien Rand 3 ausgehende Ausstanzungen 23 aufweist, die in ihrer Form den Trennschweißungen 15 derart angepaßt sein können, daß die Linienführung der Ausstanzungen 23 die Linienführung der Trennschweißungen 15 gleichsam mit Abstand umgibt (vgl. Fig. 1). Diese Gestaltung zielt auf eine vereinfachte Herstellung hin. Durch die Formgebung und Anordnung der Ausstanzungen 23 und 11 werden trotz vierlagiger Bahn die beiden Bereiche der Vorderlage 7 gemäß den Fig. 3 und 4 für die Anbringung der Trennschweißungen 15 von beiden Seiten her zugänglich. Wie Fig. 5 in Verbindung mit Fig. 1 erkennen läßt, ist die Tiefe der Rückenlehnentasche 6 gegenüber dem Stand der Technik vergleichsweise vergrößert bzw. verlängert. Zwischen den Ausstanzungen 23 wird ein Schutzvorhang 24 gebildet, der in der übergestülpten Stellung des Sitzbezuges 1 am Sitz den rückwärtigen Teil des Sitzpolsters abdeckt und schützt. Durch die Ausstanzungen 23 werden ansonsten Schutzlappen 25 gebildet, die den hinteren Gelenkbereich des Sitzes schützend umgeben. Wie Fig. 9 erkennen läßt, können die Ausstanzunge 23 auch fehlen, so daß hier der Schutzvorhang 24 unmittelbar durchgeht bzw. in die Schutzlappen 25 übergeht und der Sitz von diesem Schutzvorhang 24 in der im Kraftfahrzeug montierten Stellung gleichsam bis zum Boden des Kraftfahrzeuges umgeben und geschützt wird.

Die Fig. 6 bis 9 lassen eine zweite Ausführungsform des Sitzbezuges erkennen. Gemäß Fig. 6 besitzt die Ausstanzung 11 in dem Bereich der Rücklage 8 einen etwas anderen Kurvenverlauf, wobei die Linienführung hier nicht in den freien Rand 3, sondern in die Querschweißung 9 bzw. Perforation 10 ausläuft. Abgeschrägte Ecken 13 wurden hier nicht verwirklicht.

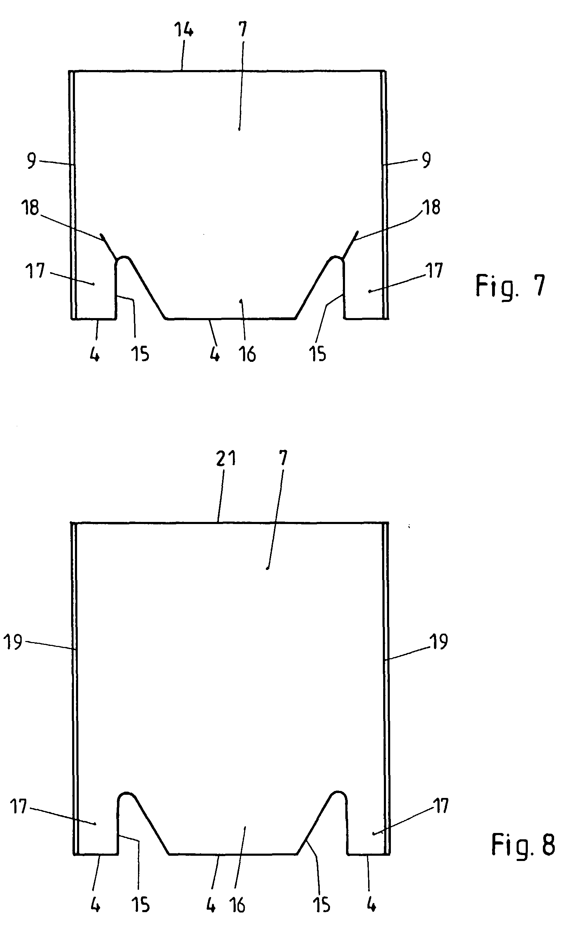

Fig. 7 läßt erkennen, daß die Trennschweißungen 15 eine etwas andere Formgestaltung aufweisen, so daß die Fixier- und Eingriffsfalte 16 einen trapezartigen Umriß erhält. Die Perforationsstrecken 18 können unmittelbar an die Trennschweißung 15 anschließen.

In Fig. 8 wiederholt sich die Formgebung der Trennschweißungen 15, da die Bereiche der Vorderlage 7 gemäß den Fig. 7 und 8 hier verbunden sind.

Fig. 10 zeigt den Sitzbezug 1 gemäß den Fig. 1 bis 5 in seiner Stellung übergestülpt an einem Kraftfahrzeug-Sitz 26. Der Sitz 26 weist ein Sitzpolster 27 mit Sitzfläche 28 auf. Es ist eine Rückenlehne 29 vorgesehen, die dem Rücken des Benutzers zugekehrt eine Rückenlehnenfläche 30 besitzt. Der Sitz 26 besitzt ansonsten ein Untergestell 31 zur Verankerung im Kraftfahrzeug. Die Rückenlehne 29 ist mit dem Untergestell 31 bzw. an dem Sitzpolster 27 durch Gelenkbereiche 32 in bekannter Weise schwenkbar verbunden, um verschiedene Neigungen der Rückenlehne 29 einstellen zu können. Zwischen dem zu Sitzzwecken nicht nutzbaren Teil der Sitzfläche 28 und dem betreffenden Teil der Rückenlehne 29 ist ein Spalt 33 vorhanden, in den hinein die Fixier- und Eingriffsfalte 16 entweder von Hand oder mit Hilfe einer Rüsselplatte maschinell eingeschoben wird, nachdem die Rückenlehnentasche 6 und die Sitztasche 5 über die betreffenden Teile des Sitzes gestülpt worden sind. Man erkennt die Querschweißungen 9 und 19 und die Lage des Schutzstreifens 12, der gleichsam die Seitenbereiche und untere Bereiche des Sitzpolsters 27 schützt und umgibt.

### BEZUGSZEICHENLISTE

- 1 -: Sitzbezug
- 2 -: Pfeil
- 3 -: Rand
- 4 -: Rand
- 5 -: Sitztasche
- 6 -: Rückenlehnentasche
- 7 -: Vorderlage
- 8 -: Rücklage
- 9 -: Querschweißung
- 10 -: Perforation
- 11 -: Ausstanzung
- 12 -: Schutzstreifen
- 13 -: Ecke
- 14 -: Rand
- 15 -: Trennschweißung
- 16 -: Fixier- und Eingriffsfalte
- 17 -: Schutzelement
- 18 -: Perforationsstrecke
- 19 -: Querschweißung
- 20 -: Ecke

- 21 -: Rand
- 22 -: Ausnehmung
- 23 -: Ausstanzung
- 24 -: Schutzvorhang
- 25 -: Schutzlappen
- 26 -: Sitz
- 27 -: Sitzpolster
- 28 -: Sitzfläche
- 29 -: Rückenlehne
- 30 -: Rückenlehnenfläche
- 31 -: Untergestell
- 32 -: Gelenkbereich
- 33 -: Spalt

## Patentansprüche

1. Sitzbezug (1) zum Schutz eines Kraftfahrzeug-Sitzes (26) aus einem mindestens doppellagigen Teil aus Kunststoffolie, insbesondere für die Erstausstattung, mit einer durchgehenden, die Sitzfläche (28) und die Rückenlehnenfläche (30) des Sitzes (26) schützenden Vorderlage (7) und einer mit der Vorderlage durch Querschweißungen (9, 19) verbundenen Rücklage (8), die in Verbindung mit der Vorderlage (7) eine die Rückenlehne (29) des Sitzes (26) zumindest teilweise aufnehmende Rückenlehnentasche (6) und eine das Sitzpolster (27) zumindest teilweise umschließende Sitztasche (5) bildet, **dadurch gekennzeichnet**, daß die die Sitztasche (5) mitbildende Rücklage (8) einen durch eine Ausstanzung (11) gebildeten U-förmigen, die Seiten des Sitzpolsters (27) umschließenden Schutzstreifen (12) aufweist, und daß die Vorderlage (7) in dem für den Spalt (33) zwischen Rückenlehne (29) und Sitzpolster (27) bestimmten Bereich zu beiden Seiten je ein Schutzelement (17) zum Abdecken der Gelenkbereiche (32) des Sitzes (26) aufweist.

2. Sitzbezug nach Anspruch 1, **dadurch gekennzeichnet**, daß die Vorderlage (7) in dem für den Spalt (33) zwischen Rückenlehne (29) und Sitzpolster (27) bestimmten Bereich eine Fixier- und Eingriffsfalte (16) aufweist, die durch die Vorderlage (7) verbindende Trennschweißungen (15) begrenzt wird, wobei die Trennschweißungen (15) mit Abstand zu den Querschweißungen (9, 19) enden und so gleichzeitig die Schutzelemente (17) begrenzen.

3. Sitzbezug nach Anspruch 2, **dadurch gekennzeichnet**, daß die Vorderlage (7) und die Rücklage (8) in dem für den Spalt (33) zwischen Rückenlehne (29) und Sitzpolster (27) bestimmten Bereich mit Ausnahme der Trenn- und Querschweißungen (15, 9, 19) unverbunden sind.

4. Sitzbezug nach einem der Ansprüche 1 bis 3, **dadurch gekennzeichnet**, daß die die Rückenlehnentasche (6) mitbildende Rücklage (8) zur Abdeckung des rückwärtigen Teils des Sitzpolsters (27) verlängert ist.

5. Sitzbezug nach Anspruch 4, **dadurch gekennzeichnet**, daß die die Rückenlehnentasche (6) mitbildende Rücklage (8) zwei Ausstanzungen (23) aufweist, die die Trennschweißungen (15) mit Abstand umgeben.

6. Sitzbezug nach Anspruch 4, **dadurch gekennzeichnet**, daß die die Rückenlehnentasche (6) mitbildende Rücklage (8) bis zum freien Ende der Fixier- und Eingriffsfalte (16) verlängert ist.

7. Sitzbezug nach einem der Ansprüche 1 bis 6, **dadurch gekennzeichnet**, daß die an der Rücklage (8) der Sitztasche (5) vorgesehene und den Schutzstreifen (12) begrenzende Ausstanzung (11) die Trennschweißungen (15) mit Abstand umschließt.

8. Sitzbezug nach einem der Ansprüche 1 bis 7, **dadurch gekennzeichnet**, daß die an der Rücklage (8) der Sitztasche (5) vorgesehene und den Schutzstreifen (12) begrenzende Ausstanzung (11) in dem freien Rand (3) der Rücklage (8) endet.

9. Sitzbezug nach einem der Ansprüche 1 bis 8, **dadurch gekennzeichnet**, daß die Vorderlage (7) beidseitig Perforationsstrecken (18) zum Durchstecken der Gurtpeitsche aufweist.

10. Sitzbezug nach einem der Ansprüche 1 bis 9, **dadurch gekennzeichnet**, daß die Sitztasche (5) und/oder die Rückenlehnentasche (6) abgeschrägte Ecken (13, 20) aufweist.

## Claims

1. A seat cover (1) for protecting a motor vehicle seat (26), the seat cover being made from an at least double-layered piece of plastic film, in particular for the single use in car workshops, comprising a front layer (7) extending over and protecting the seating (28) and the backrest surface (30) of the seat (26) and a rear layer (8) connected with the front layer by transverse welding (9, 19) and together with the front layer (7) forming a backrest pocket (6) for the reception of at least a part of the backrest (29) and forming a seat pocket (5) for the reception of at least a part of the seat cushion (27), **wherein** the rear layer (8) forming part of the seat pocket (5) comprises a protecting strip (12) in U-form formed by a cutout (11) and surrounding the sides of the seat cushion (27), and the part of the front layer (7) adapted to the gap (33) between the backrest (29) and the seat cushion (27) comprises at both sides a protecting element (17) each to cover the link regions (32) of the vehicle seat (26).

2. The seat cover of claim 1, **wherein** the part of the front layer (7) adapted to the gap (33) between the backrest (29) and the seat cushion (27) comprises a fixing fold (16) formed by separating welded seams (15) connecting the front layer (7), whereby the separating welded seams (15) end with distance to the transverse welded seams (9, 19) thus limiting the protecting elements (17).

3. The seat cover of claim 2, **wherein** the parts of the front layer (7) and of the rear layer (8) adapted to the gap (33) between the backrest (29) and the seat cushion (27) are not connected to each other except by the separating welded seams (15) and transverse welded seams (9, 19).

4. The seat cover of one of the claims 1 to 3, **wherein** the part of the rear layer (8) forming the backrest pocket (6) is designed longer to cover the part of the seat cushion (27) extending backwardly.

5. The seat cover of claim 4, **wherein** the part of the rear layer (8) forming the backrest pocket (6) comprises two cutouts (23) surrounding the separating welded seams (15) with distance.

6. The seat cover of claim 4, **wherein** the part of the rear layer (8) forming the backrest pocket (6) extends to the free end of the fixing fold (16).

7. The seat cover of one of the claims 1 to 6, **wherein** the cutout (11) provided on the part of the rear layer (8) forming the seat pocket (5) and bordering the protecting strip (12) surrounds the separating welded seams (15) with distance.

8. The seat cover of one of the claims 1 to 7, **wherein** the cutout (11) provided on the part of the rear layer (8) forming the seat pocket (5) and bordering the protecting strip (12) extends into the free edge (3) of the rear layer (8).

9. The seat cover of one of the claims 1 to 8, **wherein** the front layer (7) comprises perforation lines (18) on both sides to place the lock of the belt.

10. The seat cover of one of the claims 1 to 9, **wherein** the seat pocket (5) and/or the backrest pocket (6) comprises chamfered corners (13, 30).

## Revendications

1. Housse de siège (1) destinée à la protection d'un siège (26) de véhicule automobile, notamment pour la première monte, constitué d'un élément fait d'un feuil de matière plastique comportant au moins deux couches, avec une couche avant (7) continue qui protège la surface d'assise (28) et la surface de dossier (30) du siège (26) et avec une couche arrière (8) réunie à la couche avant par des soudures transversales (9, 19), couche arrière qui forme, en liaison avec la couche avant (7), une poche de dossier (6) recouvrant au moins partiellement le dossier (29) du siège (26) et une poche d'assise (5) recouvrant au moins partiellement le coussin d'assise (27), caractérisé
en ce que la couche arrière (8) constituant en partie la poche d'assise (5) présente une bande de protection (12) formée au moyen d'une découpe (11) en U recouvrant les côtés du coussin d'assise (27), et
en ce que la couche avant (7), dans la zone destinée à l'interstice (33) se trouvant entre le dossier (29) et le coussin d'assise (27), présente de chaque côté un élément de protection (17) destiné à recouvrir les zones d'articulation (32) du siège (26).

2. Housse de siège suivant la revendication 1, caractérisée
en ce que la couche avant (7) présente, dans la zone destinée à l'interstice (33) se trouvant entre le dossier (29) et le coussin d'assise (27), un pli de fixation et de préhension (16) limité par les soudures de séparation (15) réunissant la couche avant (7), où les soudures de séparation (15) se terminent à une certaine distance des soudures transversales (9, 19) et limitent dans le même temps les éléments de protection (17).

3. Housse de siège suivant la revendication 2, caractérisée
en ce que la couche avant (7) et la couche arrière (8) ne sont, à l'exception des soudures de séparation et transversales (15, 9, 19), pas reliées entre elles dans la zone destinée à l'interstice (33) entre le dossier (29) et le coussin d'assise (27).

4. Housse de siège suivant l'une quelconque des revendications 1 à 3, caractérisée
en ce que la couche arrière (8) constituant en partie la poche de dossier (6) est prolongée de manière à recouvrir la partie arrière du coussin d'assise (27).

5. Housse de siège suivant la revendication 4, caractérisée
en ce que la couche arrière (8) constituant en partie la poche de dossier (6) présente deux découpes (23) qui entourent à une certaine distance les soudures de séparation (15).

6. Housse de siège suivant la revendication 4, caractérisée
en ce que la couche arrière (8) constituant en partie la poche de dossier (6) est prolongée jusqu'à l'extrémité libre du pli de fixation et de préhension (16).

7. Housse de siège suivant l'une quelconque des revendications 1 à 6, caractérisée
en ce que la découpe (11) prévue à la couche arrière (8) de la poche d'assise (5) et qui limite la bande de protection (12) entoure les soudures de séparation (15) à une certaine distance.

8. Housse de siège suivant l'une quelconque des revendications 1 à 7, caractérisée
en ce que la découpe (11) prévue à la couche arrière (8) de la poche d'assise (5) et qui limite la bande de protection (12) se termine au bord libre (3) de la couche arrière (8).

9. Housse de siège suivant l'une quelconque des revendications 1 à 8, caractérisée
en ce que la découpe prévue à la couche avant (7) présente des deux côtés des zones de perforation (18) destinées au passage des attaches des boucles des ceintures de sécurité.

10. Housse de siège suivant l'une quelconque des revendications 1 à 9, caractérisée
en ce que la poche d'assise (5) et/ou la poche de dossier (6) présente des coins coupés (13, 20).
